**Europäisches Patentamt**

**European Patent Office**

**Office européen des brevets**

(19)

(11) Numéro de publication : **0 633 411 A1**

(12) ## DEMANDE DE BREVET EUROPEEN

(21) Numéro de dépôt : **94401560.1**

(22) Date de dépôt : **06.07.94**

(51) Int. Cl.$^6$ : **F16H 61/28**

(30) Priorité : **08.07.93 FR 9308429**

(43) Date de publication de la demande :
**11.01.95 Bulletin 95/02**

(84) Etats contractants désignés :
**CH DE ES GB IT LI**

(71) Demandeur : **S.A.M.M.- Société d'Applications des Machines Motrices
Chemin de la Malmaison
F-91570 Bièvres (FR)**

(72) Inventeur : **Devaud, Gérard
26 rue St. Lambert
F-75015 Paris (FR)**
Inventeur : **Grand, Serge
4 Allée des Tilleuls
F-91140 Villebon (FR)**

(74) Mandataire : **Martin, Jean-Paul et al
c/o CABINET LAVOIX
2, Place d'Estienne d'Orves
F-75441 Paris Cedex 09 (FR)**

(54) **Système de sélection assistée des rapports d'une boite de vitesses, notamment sur un véhicule automobile.**

(57) Ce système de sélection assistée comprend un actionneur électrohydraulique (12) de commande de l'organe d'entrée de la boite de vitesses, pouvant lui-même être commandé par des paramètres fournis par un calculateur de contrôle du moteur ; l'actionneur (12) comporte un ensemble d'électrovannes (34, 35, 37, 52, 53) reliées à des vérins (15, 16, 41, 42) de commande de l'arbre (13) de sélection des fourchettes, dans le cas d'une boite de vitesses du type à fourchettes ; les vérins (15, 16) peuvent commander la rotation de l'arbre (13) au moyen d'un basculeur (14) pour sélectionner la fourchette correspondant au rapport choisi, et commander l'arbre (13) en translation afin d'engager le rapport choisi par déplacement de la fourchette sélectionnée. Ce système de sélection automatique, applicable également aux boites de vitesses du type à barillet, permet, couplé au calculateur de contrôle moteur, d'épargner au conducteur l'opération de débrayage-embrayage tout en maîtrisant totalement son choix de vitesse s'il le souhaite, et ce sans perte par glissement.

FIG.2

EP 0 633 411 A1

La présente invention a pour objet un système de sélection assistée des rapports d'une boîte de vitesses, notamment sur un véhicule automobile, cette boîte de vitesses étant pourvue d'un organe d'entrée déplaçable en rotation et en translation ou uniquement rotatif, pour exécuter la sélection choisie.

On connaît divers types classiques de boîtes de vitesses, parmi lesquels on peut citer les suivantes : boîtes électromagnétiques, équipées d'un électroaimant et sélectionnant des réducteurs épicycloïdaux, boîtes à présélection pneumatique, utilisées notamment sur des autobus, boîtes transfluides avec coupleur hydraulique, boîtes à commande hydraulique, avec distributeur hydraulique au volant.

La boîte de vitesses à coupleur hydraulique et sélection automatique ou semi-manuelle a pris le pas sur les autres réalisations. Ces boîtes de vitesses sans dispositif supplémentaire ont des pertes par glissement.

Le brevet GB-A-2214248 décrit un mécanisme à vérins asservis dont la commande à la position requise est la résultante d'un calcul exécuté via une électronique d'asservissement 10, entre un ordre dont le niveau est pré-établi électrohydrauliquement, et une position d'immobilisation.

Les différentes positions à obtenir en regard des vitesses à engager résultent de l'association d'une électrovalve proportionnelle, d'un vérin, d'un détecteur de déplacement et d'une électronique.

Il s'agit ainsi d'un asservissement électrohydraulique de position qui présente l'inconvénient, majeur pour une telle application, de positionner le vérin d'une façon indéterminée lors d'une panne simple, en particulier électrique.

Les boîtes à commande semi-automatique visées par la présente invention n'ont pas de coupleur hydrodynamique. Leur rendement est uniquement celui du train d'engrenages d'une boîte traditionnelle. La sélection se fait selon l'un des moyens suivants :

1) par action sur les fourchettes (sélection linéaire)

2) par action sur un barillet rotatif,

3) par action sur une timonerie (système rotolinéaire).

Pour ces trois modes de sélection connus, l'actionnement est hydraulique. Mais ces dispositifs présentent divers inconvénients. Ainsi la sélection linéaire par action sur les fourchettes (sélection du 1) ci-dessus exige de nombreuses électrovannes, à raison de deux électrovannes par vérin, ou bien une force permamente de rappel hydraulique (application de la pression sur une section différentielle) ou mécanique (ressort); ces autres dispositions engendrent un surdimensionnement des électrovalves (doublement des forces de commande). La sécurité de la boîte de vitesses repose sur la fiabilité du système d'interdictions positives qui assure l'impossibilité d'engager deux rapports en même temps. Cette solution est donc à la fois complexe et onéreuse.

La commande par barillet rotatif assure la sélection et les interdictions positives, mais nécessite une pièce mécanique de transformation du mouvement rotatif en mouvement linéaire pouvant être difficile à réaliser.

Selon l'architecture de la boîte et le nombre de vitesses, le déplacement des fourchettes se fait par 1, 2 ou 3 arbres.

Conformément à l'invention, le système de sélection assistée des rapports d'une boite de vitesses comprend un actionneur électro-hydraulique de commande de l'organe d'entrée, pouvant lui-même être commandé par des paramètres fournis par un calculateur de contrôle du moteur.

L'invention réalise donc un mode d'action original de pilotage des fourchettes de commande de changement de vitesses d'une boite de vitesses classique, dont l'architecture n'est pas modifiée, et ce en automatisant les changements de vitesses.

L'utilisation d'un tel système de sélection automatique sur un véhicule de tourisme grand public permet, couplé au calculateur de contrôle moteur (entre autre de l'injection et de l'allumage) d'épargner au conducteur l'opération de débrayage-embrayage, tout en lui permettant de maîtriser entièrement son choix de vitesse s'il le souhaite, et ce sans perte par glissement.

Suivant l'invention également, l'actionneur comprend un ensemble d'électrovannes bistables reliées à des vérins de commande de l'organe d'entrée de la boite de vitesses en translation et en rotation ou en rotation seulement, en fonction des ordres reçus du conducteur via le calculateur. Ainsi selon le type de boite de vitesses, le mouvement peut être soit roto-linéaire, en conservant tout ou partie de la timonerie de commande, soit uniquement rotatif lorsque les fourchettes d'entrée de la boite de vitesses sont commandées exclusivement par un barillet rotatif.

Dans tous les cas, outre les actionneurs électro-hydrauliques précités, l'engagement-dégagement s'accompagne d'une commande d'embrayage. Celle-ci peut être notamment à double entrée, à savoir commande via la pédale, ou commande via une électrovalve qui agit en parallèle et sélectivement sur le vérin d'embrayage.

D'autres particularités et avantages de l'invention apparaîtront au cours de la description qui va suivre, de deux formes de réalisation de l'invention illustrées sur les dessins annexés, données à titre d'exemples non limitatifs.

La figure 1 est un schéma bloc d'un ensemble boite de vitesses-moteur d'un véhicule incorporant le système de sélection assistée selon l'invention.

La figure 2 est un schéma simplifié d'une première forme de réalisation du système de sélection assistée selon l'invention, adaptée à la production d'un mouvement roto-linéaire.

La figure 3 est une vue mi-coupe longitudinale mi-élévation d'un actionneur électro-hydraulique du type roto-linéaire pour la mise en oeuvre du système de sélection assistée schématisé à la Fig.2.

La figure 4 est une vue en coupe transversale suivant 4/4 de la Fig.3.

La figure 5 est une vue en coupe axiale partielle de la Fig.3.

La figure 6 est une vue schématique d'une seconde forme de réalisation de l'actionneur électro-hydraulique visé par l'invention, adapté à la génération d'un mouvement uniquement rotatif pour la commande d'une boite de vitesses du type à barillet rotatif d'entrée.

La figure 7 est une vue mi-élévation mi-coupe d'un actionneur électrohydraulique uniquement rotatif, correspondant à la forme de réalisation de la Fig.6.

la figure 8 est une vue de dessus avec coupe partielle de l'actionneur suivant 8-8 de la Fig.7.

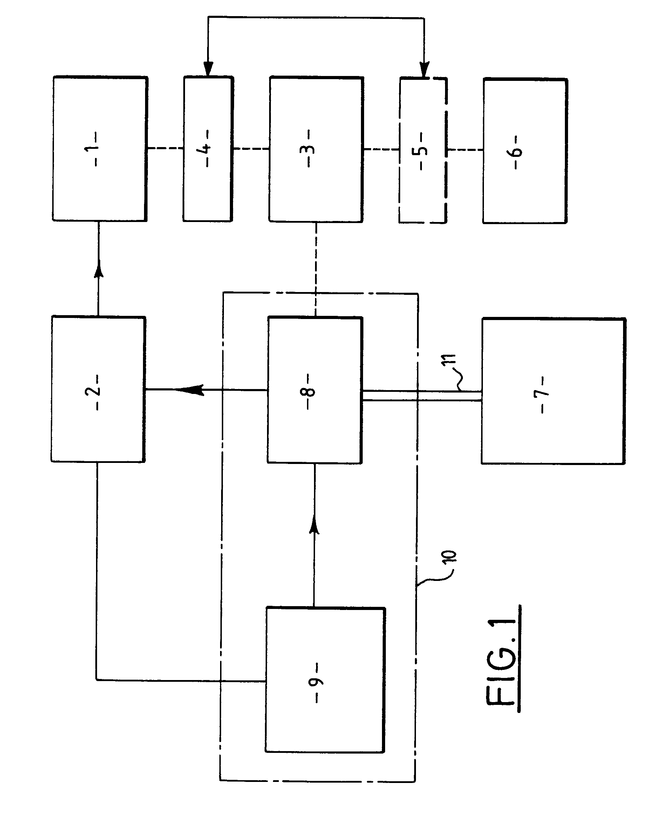

Le schéma bloc de la Fig.1 illustre l'organisation d'un circuit du véhicule dans lequel est intégré le système de sélection assistée des rapports d'une boite de vitesses visé par l'invention.

Ce circuit comprend un moteur 1, relié à un calculateur 2 d'injection et d'allumage, une boite de vitesses 3, un embrayage dont les positions 4 et 5 sont représentées de part et d'autre de la boite de vitesses 3, les roues motrices 6, reliées à la boite de vitesses, une génération hydraulique 7 haute pression du véhicule, un actionneur électro-hydraulique 8 relié, d'une part à la boite de vitesses 3, et d'autre part à une interface ergonomique 9 de commande des vitesses qui peut envoyer des ordres à l'actionneur 8. Cette interface 9 est elle-même reliée au calculateur 2 qui peut lui faire parvenir les paramètres du moteur 1.

L'actionneur 8 et l'interface 9 constituent un sous-ensemble 10 plus précisément constitutif de la présente invention. L'actionneur 8 est relié à la génération hydraulique 7 par une liaison hydraulique 11, la boite de vitesses 3 est reliée aux deux positions 4, 5 de l'embrayage, aux roues motrices 6 et au moteur 1 par des liaisons mécaniques représentées en pointillés. Les autres liaisons du circuit (entre l'actionneur 8 d'une part, le calculateur 2 et l'interface 9 d'autre part, entre le calculateur 2 et l'interface 9, et entre le calculateur 2 et le moteur 1) sont électriques.

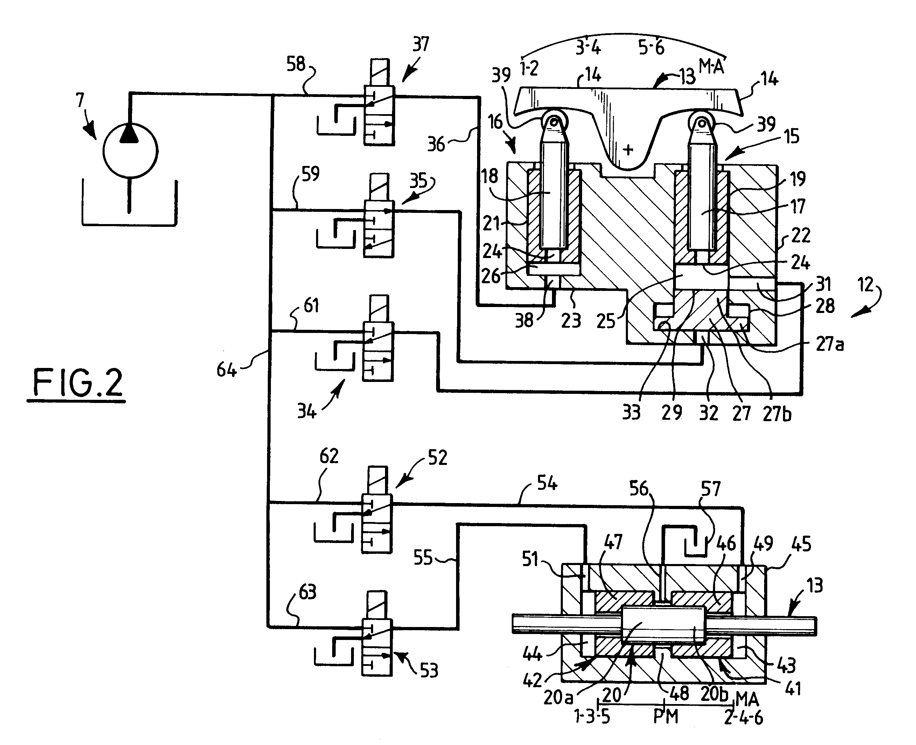

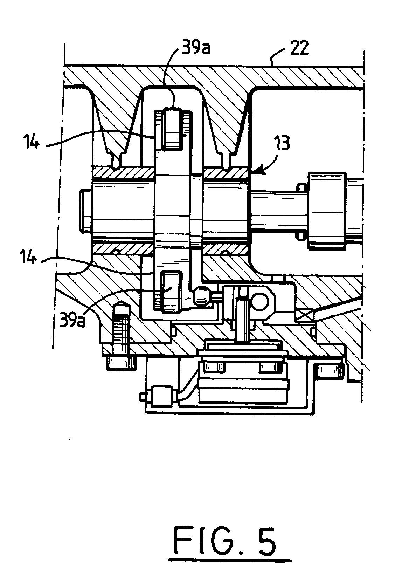

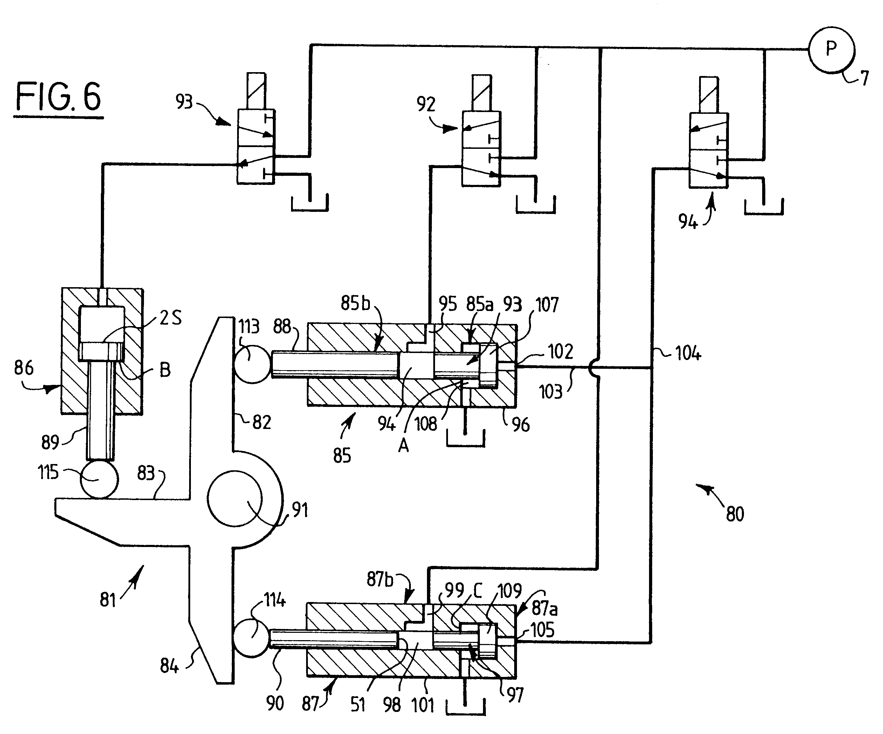

L'actionneur électro-hydraulique 8 peut être soit à mouvement roto-linéaire, comme représenté aux Fig.2 à 5, soit uniquement rotatif (Fig.6 à 8). L'actionneur 8 commande l'organe d'entrée de la boite de vitesses 3, cet organe d'entrée pouvant lui-même être commandé par des paramètres fournis par le calculateur 2.

Description de l'actionneur électrohydraulique rotolinéaire représenté aux Fig.2 à 5.

L'actionneur électrohydraulique 12 représenté aux Fig.2 à 5 est mécaniquement relié à la boite de vitesse 3 par une interface constituée par un arbre 13 de commande, équipé dans sa zone centrale de deux ailettes latérales 14. L'arbre 13 constitue donc l'organe d'entrée de la boite de vitesses 3, laquelle en l'occurrence est du type à commande par fourchettes (non représentées car connues en soi). La rotation de l'arbre 13 sélectionne la fourchette correspondant au rapport choisi, tandis que sa translation engage le rapport choisi par déplacement de la fourchette sélectionnée.

L'actionneur 12 comprend deux vérins hydrauliques antagonistes 15, 16 de commande en rotation du basculeur formé par les deux ailettes latérales 14, mécaniquement solidaire de l'arbre 13 proprement dit. Ces deux vérins 15, 16 sont disposés de part et d'autre de l'arbre 13, et coopèrent chacun avec un bras latéral ou ailette 14 du basculeur. Chaque vérin 15, 16 comporte un piston 17, 18 respectif entouré d'une cloche correspondante 19, 21 dont il et solidaire et qui est mobile en translation dans le corps 22, 23 du vérin 15, 16, entre deux positions extrêmes de butée. Le fond de la cloche 19, 21 situé du côté opposé à l'extrémité du piston 17, 18 en contact avec le basculeur 14, est percé d'un orifice 24 débouchant dans une chambre hydraulique 25, 26 pouvant être alimentée en fluide sous pression. Le vérin 15 est équipé, à l'extrémité de sa chambre 25 opposée au piston 17, d'une butée 27 disposée dans un logement 28 prolongeant la chambre 25, et mobile entre deux positions extrêmes de butée. L'une des faces opposées de la butée 27, à savoir sa face 29 la plus proche de la cloche 19, forme le fond mobile de la chambre hydraulique 25.

Un orifice 31 est percé dans le corps 22 du vérin 15 et débouche dans la chambre hydraulique 25, tandis qu'un second orifice 32, également percé dans le corps 22, débouche sur la face 33 de la butée 27, opposée à sa face 29 délimitant la chambre 25. Les deux orifices 31, 32 sont reliés à des électrovannes bistables respectives 34, 35 d'alimentation hydraulique, afin de commander le déplacement de la butée 27 dans son logement 28. La butée mobile 27 présente une section en T, dont la branche transversale 27a, opposée aux pistons 17, peut coulisser entre deux positions extrêmes dans le logement 28, dont la section est supérieure à celle de la chambre 25. La branche longitudinale 27b, qui forme le pied du T, a une section égale à celle de la chambre 25 dans laquelle elle peut coulisser, entre une première position escamotée, représentée à la Fig.2, découvrant l'orifice 31 d'alimentation de la chambre 25 et correspondant à la marche arrière (MA sur la Fig.2 au-dessus du levier 13), et une seconde position avancée fermant cet orifice 31. Cette position avant ne permet que la sélection des autres vitesses, à savoir 1, 2, 3, 4, 5, et 6 dans le cas d'une boite à 6 vitesses.

Le second vérin 16 est dépourvu d'une butée telle que 27, et sa chambre 26 est alimentée par un conduit 36 relié à une électrovanne 37 bistable, au moyen d'un orifice 38 percé dans le corps 23 du vérin 16, en regard de la cloche 21.

Les deux vérins 15 et 16 ont leurs pistons 17, 18 en contact avec les bras 14 du basculeur par tout moyen approprié tel que des roulettes 39 montées aux extrémités des pistons 17, 18.

Le couple de vérins 15, 16 et le basculeur constitué par les bras latéraux 14 permet donc de faire tourner l'arbre 13 autour de son axe sur un angle choisi pour sélectionner la fourchette correspondant au rapport à obtenir.

### Description des vérins de translation 41 et 42

L'actionneur roto-linéaire 12 comprend également deux vérins antagonistes 41, 42 disposés coaxialement à l'arbre de commande 13 et mécaniquement liés à celui-ci, afin de pouvoir le déplacer en translation d'une position centrale, représentée à la Fig.2, à l'une ou l'autre de deux positions extrêmes opposées dans des chambres respectives 43, 44, ménagées dans un corps de vérin 45. Chaque vérin 41, 42 comporte une cloche 46, 47 traversée axialement de part en part par l'arbre 13 et à l'intérieur de laquelle sont logés deux pistons 20a, 20b formant un double piston monobloc, s'étendant dans les deux cloches. Chaque cloche 46, 47 peut coulisser dans sa chambre respective 43, 44 entre une première position de butée contre un épaulement intercalaire 48 correspondant à la position centrale de point mort, et une seconde position de butée correspondant pour l'un des vérins 41, 42 aux vitesses paires, et pour l'autre vérin aux vitesses impaires. Des ajutages 49, 51 sont percés dans le corps 45 pour alimenter respectivement les chambres 43 et 44, et sont reliés à des électrovannes respectives 52, 53 par des conduites 54, 55.

Les faces opposées 20a, 20b du double piston 20, formant deux pistons opposés peuvent venir en butée, contre les épaulements correspondants des cloches 46, 47, soit simultanément dans la position centrale (représentée Fig.2), soit alternativement lorsque l'arbre 13 et le piston 20 se déplacent dans un sens ou dans l'autre sous l'effet de la pression hydraulique dans l'une des chambres 43, 44 tandis que l'autre chambre est au retour réservoir par positionnement adéquat de l'électrovanne correspondante 52 ou 53.

L'épaulement 48 formé de part et d'autre du double piston 20 et délimitant les chambres 43, 44 est percé d'un conduit 56 relié à un réservoir hydraulique 57 (bâche). Les cinq électrovannes 34, 35, 37, 52, 53, d'un type bien connu bistable et qui ne nécessite pas de description, sont toutes représentées dans leur position de repos. Elles sont alimentées en fluide hydraulique par des conduits respectifs 58, 59, 61, 62, 63 formant autant de dérivations parallèles qui débouchent dans une conduite principale 64, elle-même reliée au générateur hydraulique 7.

Le piston 20b peut venir en butée dans la cloche 46, et le piston 20a en butée dans la cloche 47, contre des épaulements correspondants ménagés dans ces cloches. De ce fait, lorsque l'arbre 13 est entraîné en translation vers la cloche 46, celle-ci est entraînée également par le piston 20b solidaire de l'arbre 13, tandis que le piston 20a glisse à l'intérieur de la cloche 47 qui reste dans sa position représentée à la Fig.2, en butée contre l'épaulement intercalaire 48. Inversement si l'arbre 13 est entraîné dans la direction opposée, le piston 20a déplace la cloche 47 jusqu'à ce qu'elle vienne en butée à l'entrée de la chambre 44, en obturant l'ajutage 51, tandis que la cloche 46 reste dans sa position de butée contre l'épaulement central 48. La translation de l'arbre 13 dans l'un ou l'autre sens engage le rapport de vitesses par déplacement de la fourchette sélectionnée par la rotation préliminaire obtenue par l'actionnement des vérins 15 et 16.

### Fonctionnement de l'actionneur électro-hydraulique 12.

### Mouvement de rotation :

L'actionneur 12 doit fournir quatre positions de rotation différentes. Les cloches 17 ,18 fournissent la position centrale, tandis que la butée mobile escamotable 27 permet l'obtention de la position décalée de marche arrière. En effet si du fluide sous pression est envoyé dans l'ajutage 32 par l'électrovanne 35, alors que comme représenté à la Fig.2 l'électrovanne 34 n'envoie plus de fluide sous pression dans la chambre 25, la butée 27 se déplace du fond de son logement 28 vers le piston 17 jusqu'à venir en butée, par sa branche latérale 27a, contre la paroi opposée du logement 28, tandis que son pied 27b obture l'orifice 31. Dans cette position remontée de la butée 27, le basculeur 14 est donc limité aux vitesses 5 et 6. Au contraire quand la butée 27 est abaissée, en découvrant l'orifice 31 et en venant par sa face 33 en contact avec le fond du logement 28, le basculeur 14 peut venir jusqu'en marche arrière.

### Sélection de la fourchette 1-2

La chambre 26 derrière le piston 18 est au retour vers le réservoir de l'électrovanne 37, la chambre 25 en regard du piston 17 est alimentée par la pression hydraulique d'alimentation. Sous l'effort du piston 17, le basculeur 14 tourne et entraîne le piston 18 jusqu'à la butée de la cloche 21 sur le fond de la chambre 26, dans lequel est percé l'ajutage 38.

### Sélection de la fourchette 3-4

La fourchette 3-4 est obtenue par recentrage du basculeur 14. Chacune des chambres derrière chaque piston 17, 18 est reliée à la pression d'alimentation. La cloche 21 est en butée contre l'extrémité de la chambre 26 opposée à l'ajutage 38 (comme représenté à la Fig.2), et la cloche 19 est en appui également contre le fond de la chambre 25 opposé à la butée 27, maintenant ainsi le basculeur 14 en position centrale.

### Sélection de la fourchette 5-6

Pour sélectionner la fourchette 5-6, la chambre 25 dans laquelle se déplace le piston 17 est au retour réservoir par positionnement adéquat de l'électrovanne 34. La chambre 26 dans laquelle se déplace le piston 18 est reliée à la pression d'alimentation, ainsi que la chambre constituée par l'ajutage 32 en regard de la butée mobile 27. Sous l'effort du piston 18, le basculeur 14 pousse le piston 17 et la cloche 19 en butée sur la face 29 de la butée 27, maintenue en position avancée par appui de son bras transversal 27a contre la paroi du logement 28 opposée à la face 33, position dans laquelle la butée 27 obture l'orifice 31.

### Sélection de la fourchette de marche arrière (MA)

La sélection de la fourchette de marche arrière s'obtient par un mouvement similaire à la sélection de la fourchette 5-6, à l'exception de la butée mobile 27 qui est en position rétractée, c'est-à-dire en appui par sa face 33 sur le fond du logement 28, découvrant l'orifice 31. La pression hydraulique est appliquée dans la chambre 26 du piston 18, alors que les deux autres chambres 25 et 32 sont au retour réservoir. L'effort sur le piston 18 entraîne le basculeur 14 qui à son tour pousse le piston 17 et la cloche 19 en butée sur la face 29 de la butée mobile 27 en position rétractée, représentée à la Fig.2 (appui de la butée 27 par sa face 33 contre le fond du logement 28).

### Mouvement de translation

L'actionneur 12 doit fournir trois positions de translation différentes.

### Engagement d'un rapport impair :

La chambre 44 du piston 20a correspondant (qui fait partie du piston double 20 précédemment décrit) est au retour vers le réservoir par commande appropriée de son électrovanne d'alimentation 53. La chambre 43 en regard du second piston 20b (constituant l'autre partie du piston double 20) est alimentée par la pression d'alimentation, par commande appropriée de son électrovanne 52. Sous l'effort du piston 20b, l'arbre 13 se déplace et entraîne le piston 20a jusqu'à venue en butée de la cloche 47 sur le fond de la chambre 44, position dans laquelle la cloche 47 obture l'ajutage 51.

### Retour au point mort :

Le point mort (PM) est obtenu par recentrage de l'arbre 13 de commande. Chacune des chambres 43 et 44 derrière chaque piston 20b et 20a est reliée à la pression d'alimentation par positionnement adéquat de son électrovanne respectif. La cloche 47 est en butée contre l'épaulement central 48 et la cloche 46 est en appui sur la face opposée de l'épaulement 48, maintenant ainsi l'arbre 13 en position centrale, comme représenté à la Fig.2.

### Engagement d'un rapport pair :

Pour engager un rapport pair, la chambre 43 derrière le piston 20b est au retour réservoir, la chambre 44 derrière le piston 20a est reliée à la pression d'alimentation. Sous l'effort du piston 20a, le piston 20b pousse la cloche 46 en butée sur le fond de la chambre 43 (vers la droite sur la Fig.2), dans sa position où cette cloche obture l'ajutage d'alimentation 49.

Il convient enfin d'ajouter les précisions suivantes :

Une fois une vitesse enclenchée, on désexcite toutes les électrovannes 35, 37... 53. A partir de n'importe quelle vitesse engagée, pour le point mort on excite les électrovannes 52 et 53. A partir du point mort, pour atteindre une vitesse donnée il faut :

| Vitesse | Exciter en premier | Puis exciter |
|---------|--------------------|--------------|
| 1 | 34 | 52 |
| 2 | 34 | 53 |
| 3 | 34 & 37 | 52 |
| 4 | 34 & 37 | 53 |
| 5 | 37 | 52 |
| 6 | 37 | 53 |
| MA | 35 & 37 | 53 |

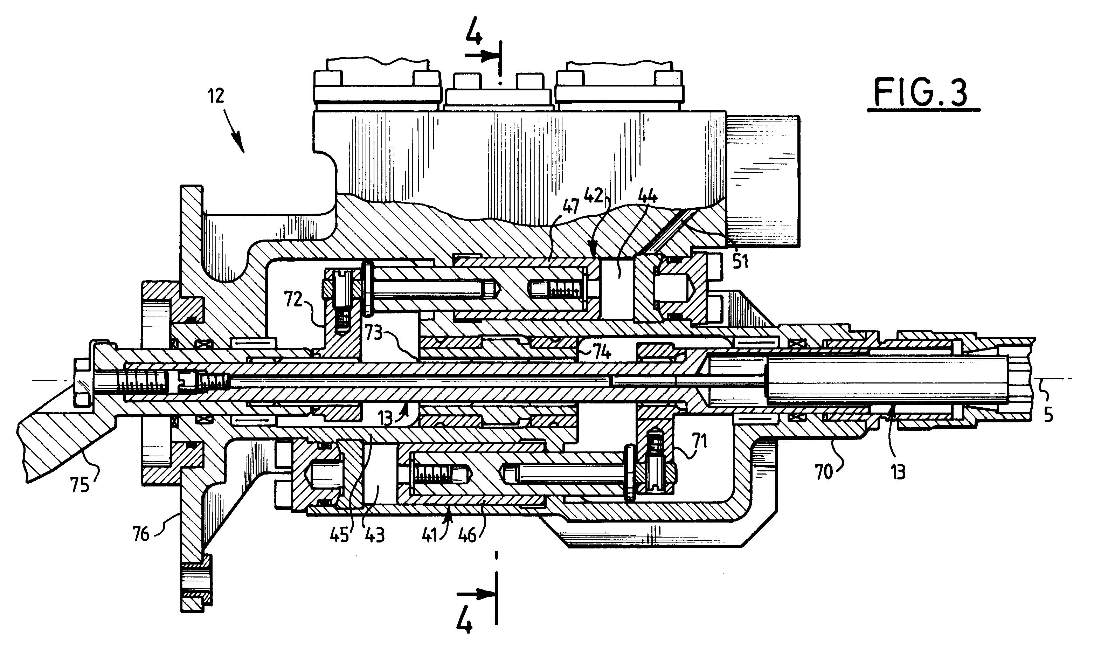

On décrira maintenant un mode de réalisation industrielle de l'actionneur électrohydraulique 12 en référence aux Fig.3 à 5.

L'arbre de commande 13 est logé dans un carter 70 et solidarisé en translation avec l'un ou l'autre des vérins 41 et 42 (Fig.3) par des bras latéraux 71 et 72 respectifs. On reconnait également les cloches 46 et 47 et les chambres hydrauliques correspondantes 43, 44. L'arbre 13 peut coulisser axialement dans un sens ou dans l'autre entre les vérins 41 et 42 grâce à un système de cannelures 73 ménagées sur l'arbre 13 et sur la face interne correspondante d'un manchon coaxial 74, fixé au corps 45 des vérins 41, 42.

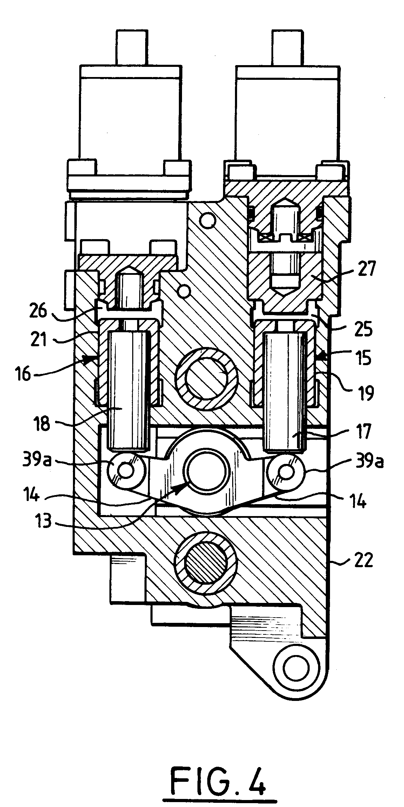

De plus l'arbre 13 a l'une de ses extrémités fixée à un levier 75 de commande des fourchettes de la boite de vitesses, de manière connue en soi (Fig.3). Le corps 45 des vérins 41, 42 est monobloc à l'une de ses extrémités avec une interface 76 d'appui avec la boite de vitesses 3. On voit sur la Fig.4 les bras latéraux 14 constituant le basculeur de l'arbre 13, ainsi que des roulettes terminales 39a portées par les bras 14 (en variante des roulettes 39 représentées à la Fig.2). Les roulettes 39a sont en appui sur les pistons respectifs 17, 18 des vérins 15, 16 d'actionnement du basculeur 14 et de l'arbre 13 en rotation. On reconnait également les cloches 19, 21, les chambres hydrauliques 25, 26 et la butée mobile 27 du vérin 15, l'ensemble des vérins et du basculeur constitué par les bras 14 étant logé dans le corps 22.

Description de l'actionneur électrohydraulique rotatif (Fig.6 à 8)

L'actionneur rotatif 80 est destiné à la commande en rotation d'un barillet (non représenté) d'entrée de la boite de vitesses 3. L'organe rotatif de commande du barillet est ici un balancier 81 à trois pales 82, 83, 84 dont deux (82 et 84) sont dans le prolongement l'une de l'autre et la troisième 83 est perpendiculaire aux deux autres. L'actionneur 80 comprend trois vérins hydrauliques 85, 86, 87 dont les pistons respectifs 88, 89, 90 sont en contact avec une pale correspondante 82, 83, 84 afin de positionner l'arbre de commande 91, solidaire du balancier 81, dans la position angulaire liée à la vitesse choisie.

Les vérins 85, 86, 87 sont actionnés par des électrovannes respectives 92, 93, 94 pouvant elles-mêmes être pilotées par des ordres provenant du calculateur moteur 2.

Deux des trois vérins, à savoir dans l'exemple représenté à la Fig.6 les vérins 85 et 87, sont des vérins doubles chacun constitué de deux vérins à simple effet (85a et 85b; 87a, 87b) disposés en série, le troisième vérin (86) étant à simple effet. Les deux pistons 88 et 93 du vérin double 85 sont alignés et séparés par une chambre hydraulique intermédiaire 94 alimentée par l'électrovanne 92 bistable (tout ou rien) via un orifice 95 dans le corps 96 du vérin 85. De même les deux pistons 90 et 97 du vérin double 87 sont alignés et séparés par une chambre hydraulique 98 alimentée, via un orifice 99 dans son corps 101, par le générateur 7 de pression hydraulique, permettant de déplacer le piston 90 et donc de faire tourner le balancier 81 par appui sur la pale 84. Dans le corps 96 du vérin 85a est percé un ajutage 102 qui communique avec une conduite 103 débouchant dans une canalisation 104 elle-même reliée d'une part à l'électrovanne 94 bistable (tout ou rien), et d'autre part à un ajutage 105 d'admission de fluide hydraulique dans le vérin 87a du vérin double 87, en regard du piston 97.

Dans l'un des doubles vérins 85, 87, à savoir dans l'exemple représenté le vérin 85, le piston 93, qui n'est pas en contact avec le balancier 81, a une section 2S supérieure à la section S de l'autre piston 88. Cette section 2S est celle de la tête 107 du piston 93 qui peut venir en butée de fin de course au fond de la chambre hydraulique correspondante 108. Le premier piston 90 du second double vérin 87 a une section $S_1$ inférieure à celle S du piston correspondant 88 de l'autre double vérin 85. Le piston 89 du vérin 86 a une section 2S. Le second piston 97 du double vérin 87 a une tête 109 dont la section est inférieure à celle 107 du piston correspondant 93 du double vérin 85. Enfin, les sections des pistons des trois vérins 85, 86, 87 et les positions des électrovannes bistables 92, 93, 94 dans leur état de repos sont déterminées de façon que le passage des électrovannes à l'état excité, sur ordre du calculateur 2, déclenche une rotation du balancier 81, et donc du barillet de la boite de vitesses, d'un angle correspondant à la vitesse sélectionnée.

Les différentes positions angulaires possibles du balancier 81 sont données à titre d'exemple non limitatif par le tableau ci-dessous, en fonction de l'état des électrovannes 92, 93, 94, soit au repos (R), soit excité (E).

| Position | 93 | 92 | 94 |
|----------|----|----|----|
| 0° | R | R | R |
| 15° | R | E | R |
| -15° | E | R | R |
| 7,5° | R | E | E |
| -7,5° | E | R | E |

R : Electrovanne au repos.

E : Electrovanne excitée.

Par ailleurs, la table de vérité des deux vérins doubles 85 et 87 est la suivante :

| U1 | U2 | Piston 88 | Piston 93 |
|----|----|-----------|-----------|
| P | P | Sortie | en appui sur face A |
| P | $R_0$ | Sortie | |
| $R_0$ | P | Rentré en appui sur piston 93 | en appui sur face A |
| $R_0$ | $R_0$ | Rentré en appui sur piston 93 | |

Dans ce tableau $R_0$ signifie retour au réservoir pour l'utilisation 1 (U1) ou utilisation 2 (U2), P signifiant "pression".

Le balancier 81 peut avoir 5 positions angulaires par exemple (0°; +7,5°; -7,5°; +15° et -15°) suivant l'état des trois électrovannes.

Position 0° du balancier

- 93 non excitée : pression établie sur le vérin 86 qui vient en butée sur la face B et développe un effort P x 2S.
- 92 non excitée : pas de pression sur la tige 88 du vérin 85 qui ne développe pas d'effort.
- Tige 90 du vérin 87 sortie; la chambre intermédiaire 98 étant à la pression, cette tige 90 développe un effort PS (inférieur à celui du vérin 86) ce qui a pour effet d'appliquer le vérin 86 sur le balancier 81.

## Position +7,5° du balancier 81

- 93 peut être excitée ou non excitée, car la position +7,5° du balancier ne dépend pas de celle du vérin 86.
- 92 excitée : pression sur la tige 88 du vérin 85 qui développe un effort P x 2S.
- 94 excitée : tige 97 du vérin 87 en appui sur la face C de la chambre. L'effort développé par la tige 97 du vérin 87 est supérieur à P x 2S.
- L'effort développé par la tige 90 du vérin 87 est inférieur à P x 2S.
- Par suite la pale 84 du balancier 81 est maintenue en appui sur le vérin 87 par le vérin 85 à la position 7,5°.

## Position -7,5° du balancier

- 93 excitée : pas d'effort développé par le vérin 86.
- 92 non excitée : pas d'effort développé par la tige 88 du vérin 85.
- 94 excitée : tige 93 du vérin 85 en appui sur la face A, développant un effort P x 2S; la tige 90 du vérin 87 développe un effort inférieur à P x 2S.

Par suite la branche 82 du balancier est maintenue en appui sur le vérin 85 par le vérin 87 à la position -7,5°.

## Position +15° du balancier

- 93 excitée ou pas excitée.
- 92 excitée : effort P x 2S développé par la tige 88 du vérin 85.
- 92 non excitée : pas d'effort développé sur les tiges 93 et 97 des vérins 85 et 87.
- La tige 88 du vérin 85 maintient la branche 84 du balancier 81 en appui sur le vérin 87.

## Position -15° du balancier

- 93 excitée : pas d'effort développé par le vérin 86.
- 92 non excitée : pas d'effort développé par la tige 88 du vérin 85.
- 94 non excitée : pas d'effort développé par la tige 93 du vérin 85.

La tige 90 du vérin 87 qui développe un effort PS maintient la pale 82 du balancier en appui sur le vérin 85.

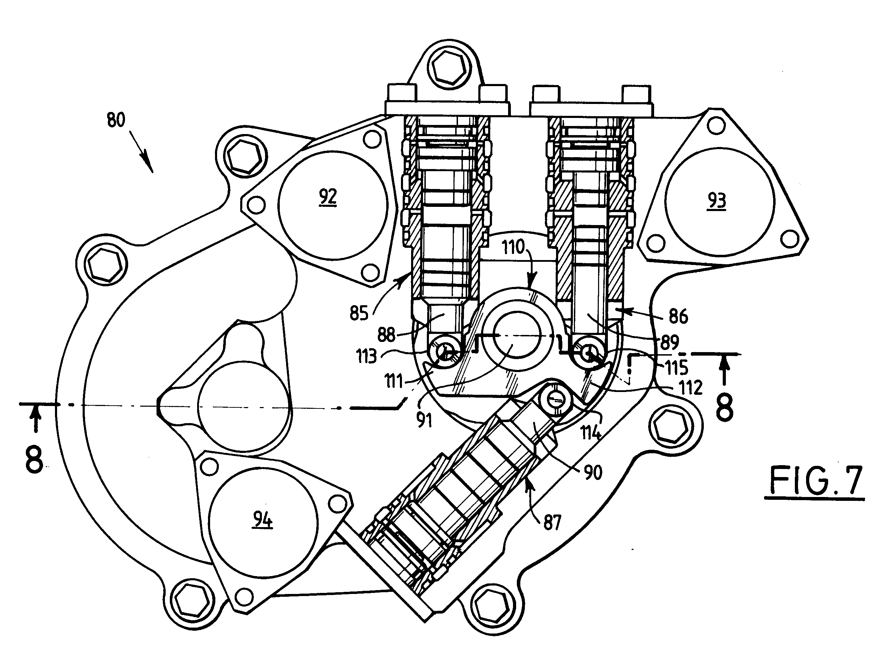

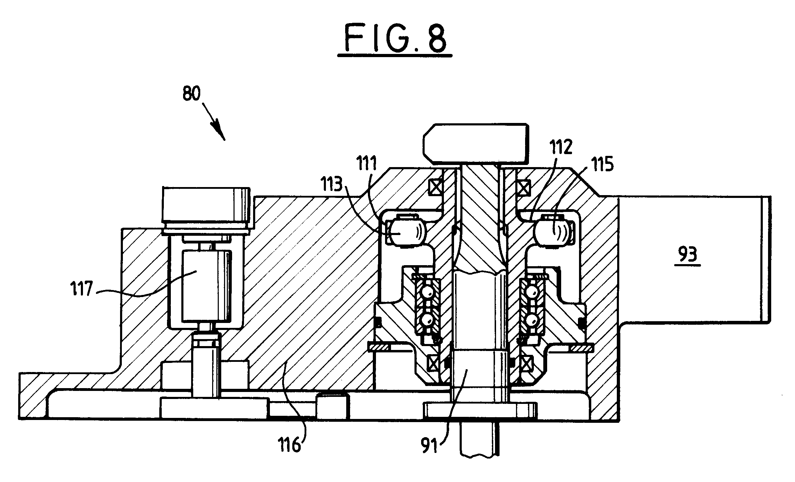

Les Fig.7 et 8 illustrent un mode de réalisation industrielle de l'actionneur électrohydraulique rotatif 80. On voit notamment l'arbre 91 de commande du barillet, le balancier 110 solidaire de cet arbre et qui est ici pourvu de deux bras radiaux 111, 112 remplissant la fonction des trois pales 82, 83, 84. En effet si le bras 111 coopère avec un seul double vérin 85 (dont le piston 88 est pourvu d'une roulette terminale 113 engagée dans un évidement correspondant du bras 111), le second bras radial 112 coopère sur l'une de ses faces avec le second double vérin 87 et sur sa face opposée avec le vérin simple effet 86, dont les pistons 90 et 89 sont également pourvus de roulettes terminales d'appui 114 et 115. Les trois vérins 85, 86, 87 sont respectivement pilotés par les électrovannes 92, 93 et 94. L'arbre 91 et les composants précités de l'actionneur 80 sont supportés par un corps 116, équipé d'un détecteur 117 de la position angulaire de l'arbre 91 (ce détecteur étant d'un type connu en soi).

Le système de sélection assistée selon l'invention fait appel uniquement à des électrovannes bistables ("tout ou rien") de commande des vérins, qui fonctionnent de butée en butée.

Consécutivement pour obtenir un déplacement de vérin défini mécaniquement par les butées, il suffit de fournir une impulsion électrique de valeur identique en durée et en niveau sur l'électrovanne bistable correspondant à la vitesse choisie.

Les potentiomètres mentionnés n'entrent pas dans la chaîne de commande et n'ont qu'un rôle de compte rendu. Le cas échéant ils peuvent être supprimés. Les tables de commande des pages 12 et 15 montrent qu'un simple levier de commande, sans aucune électronique, permet d'effectuer les passages de vitesses souhaités. La connexion avec le calculateur du moteur permet d'exécuter des passages automatiques ou semi-automatiques selon le type de manipulation choisi et/ou la sophistication du véhicule.

L'organe d'entrée du système selon l'invention peut être commandé soit directement par le conducteur au moyen d'un clavier de sélection de vitesse, par excitation en direct des électrovannes bistables, soit automatiquement à partir d'une impulsion donnée par le conducteur, ou bien uniquement en fonction des paramètres régime moteur et vitesse du véhicule sans aucune action du conducteur.

Dans ces deux derniers cas, des excitations des électrovannes bistables sont fournies par le calculateur de contrôle moteur.

**Revendications**

1. Système de sélection assistée des rapports d'une boite de vitesses (3), notamment sur un véhicule automobile, ladite boite de vitesses étant pourvue d'un organe d'entrée (13; 91) déplaçable en rotation et en translation ou uniquement rotatif pour exécuter la sélection choisie, caractérisé en ce qu'il comprend un actionneur électro-hydraulique (12; 80) de commande de cet organe d'entrée, pouvant lui-même être commandé par des paramètres fournis par un calculateur (2) de contrôle du moteur (1).

2. Système de sélection assistée des rapports d'une boite de vitesses (3), notamment sur un véhicule automobile, ladite boite de vitesses étant pourvue d'un organe d'entrée (13; 91) déplaçable en rotation et en translation ou uniquement rotatif pour exécuter la sélection choisie, ce système comprenant un actionneur électro-hydraulique (12; 80) de commande de cet organe d'entrée, pouvant lui-même être commandé par des paramètres fournis par un calculateur (2) de contrôle du moteur (1) caractérisé en ce que l'actionneur (12; 80) comprend un ensemble d'électrovannes bistables (34, 35...; 92-94) reliées à des vérins (15, 16, 41, 42; 85, 86, 87) de commande de l'organe d'entrée (13; 91) de la boite de vitesses (3) en translation et en rotation ou en rotation seulement, en fonction des ordres reçus du conducteur via le calculateur (2), et ledit organe d'entrée peut être commandé, soit directement par le conducteur au moyen d'un clavier de sélection de vitesse, par excitation en direct des électrovannes bistables, soit automatiquement à partir d'une impulsion donnée par le conducteur, ou bien uniquement en fonction des paramètres régime moteur et vitesse du véhicule sans aucune action du conducteur.

3. Système selon la revendication 2, destiné à une boite de vitesses (3) du type à commande par fourchettes, l'organe d'entrée étant un arbre (13) dont la rotation sélectionne la fourchette correspondant au rapport choisi et dont la translation engage le rapport choisi par déplacement de la fourchette sélectionnée, caractérisé en ce que l'actionneur (12) comprend deux vérins hydrauliques antagonistes (15, 16) de commande en rotation d'un basculeur (14) mécaniquement solidaire de l'arbre d'entrée, disposés de part et d'autre de cet arbre et coopérant chacun avec un bras latéral (14) du basculeur, chaque vérin comportant un piston (17, 18) entouré d'une cloche (19, 21) dont il est solidaire et qui est mobile en translation dans le corps (22) du vérin, entre deux positions extrêmes de butée, le fond de la cloche situé du côté opposé à l'extrémité du piston en contact avec le basculeur, étant percé d'un orifice (24) débouchant dans une chambre hydraulique (25, 26) pouvant être alimentée en fluide sous pression par une électrovanne correspondante (34, 35).

4. Système selon la revendication 3, caractérisé en ce que l'un (15) des vérins est équipé à l'extrémité de sa chambre (25) opposée au piston (17) , d'une butée (27) disposée dans un logement prolongeant la chambre et mobile entre deux positions, l'une (29) des faces de cette butée formant le fond mobile de la chambre hydraulique (25), des orifices (31, 32) percés dans le corps (22) du vérin débouchant, l'un (31) dans ladite chambre (25) et l'autre (32) sur la face de la butée (27) opposée à sa face (29) délimitant la chambre du vérin, et ces deux orifices sont reliés aux électrovannes respectives bistables (34, 35) d'alimentation hydraulique afin de commander le déplacement de la butée, dont une position escamotée au fond du corps permet la sélection de la marche arrière (MA) par rotation du basculeur (14) du côté dudit vérin (15).

5. Système selon la revendication 4, caractérisé en ce que la butée mobile (27) a une section en T dont la branche transversale (27a), opposée au piston (17) peut coulisser entre deux positions extrêmes dans un logement (28) de section supérieure à celle de la chambre (25) du vérin (15), et dont la branche longitudinale (27b) a une section égale à celle de la chambre (25) du vérin dans laquelle elle peut coulisser, entre une position escamotée au fond du logement (28) découvrant l'orifice d'alimentation (31) de ladite chambre et correspondant à la marche arrière (MA), et une position avancée fermant cet orifice (31) et ne permettant que la sélection des autres vitesses (1-2-3-4-5-6).

6. Système selon la revendication 5, caractérisé en ce que l'actionneur (12) comporte deux vérins antagonistes (41, 42) disposés coaxialement à l'arbre (13) de commande et mécaniquement liés à celui-ci, afin de pouvoir le déplacer en translation d'une position centrale à l'une ou l'autre de deux positions extrêmes opposées.

7. Système selon la revendication 6, caractérisé en ce que chaque vérin (41, 42) est équipé d'une cloche (46, 47) pouvant coulisser dans une chambre hydraulique (43, 44) entre une première position de butée correspondant à la position centrale de point mort et une seconde position de butée correspondant, pour un vérin (41 ou 42) aux vitesses paires, et pour l'autre vérin (42 ou 41) aux vitesses impaires, et chaque chambre est reliée à une électrovanne bistable d'alimentation hydraulique (52, 53).

8. Système selon la revendication 7, caractérisé en ce que les deux cloches (46, 47) sont coaxiales à l'arbre de commande (13) ainsi qu'à un piston central (20) coaxial et solidaire de l'arbre, et dont les faces opposées forment deux pistons (20a, 20b) respectifs des vérins et sont soumises à la pression hydraulique dans les chambres (43, 44) des vérins (41, 42), ces pistons pouvant venir en butée dans les deux cloches.

9. Système selon la revendication 8, caractérisé en ce que les vérins (15, 16) de commande de l'arbre (13) en rotation comportent chacun un piston (17, 18) solidaire, à son extrémité opposée à une cloche (19, 21) coiffant ce piston, d'une pièce fixée à l'arbre (13).

10. Système selon la revendication 2, dans lequel l'actionneur (80) est destiné à la commande, en rotation uniquement, d'un barillet d'entrée de la boite de vitesses (3), caractérisé en ce que l'organe rotatif de commande du barillet est un balancier (81) à trois pales (82, 83, 84) et l'actionneur comprend trois vérins hydrauliques (85, 86, 87), actionnés par des électrovannes (92, 93, 94), et dont les pistons (88, 89, 90) sont respectivement en contact avec une pale du balancier afin de positionner l'arbre de commande (91) solidaire du balancier dans la position angulaire correspondant à la vitesse choisie, les électrovannes pouvant être pilotées par des ordres provenant du calculateur (2).

11. Système selon la revendication 10, caractérisé en ce que deux (85, 87) des trois vérins sont des vérins doubles, chacun constitués de deux vérins simple effet (85a, 85b; 87a, 87b) disposés en série, dont les deux pistons (88, 93 et 90, 97) sont alignés et séparés par une chambre hydraulique intermédiaire (94; 98) alimentée par une électrovanne (92) ou par un générateur hydraulique (7), le troisième vérin (86) étant à simple effet.

12. Système selon la revendication 11, caractérisé en ce que dans l'un (85) des doubles vérins (85, 87), le piston (93) qui n'est pas en contact avec le balancier (81) a une section (A) supérieure à celle (S) de l'autre piston (88) et est pourvu d'une tête (107) qui peut venir en butée de fin de course au fond de la chambre hydraulique correspondante (108).

13. Système selon la revendication 12, caractérisé en ce que le second double vérin (87) comporte un premier piston (90) en contact avec le balancier (84, 81), de section inférieure à celle (S) du piston correspondant (88) de l'autre double vérin (85), tandis que son second piston (97) a une section inférieure à celle (2S) du piston (93) correspondant de l'autre double vérin (85).

14. Système selon l'une des revendications 11 à 13, caractérisé en ce que les sections des pistons des trois vérins (85, 86 et 87) et les positions des électrovannes (92, 93, 94) dans leur état de repos, sont déterminés de façon que le passage des électrovannes à l'état excité sur ordre du calculateur (2), déclenche une rotation du balancier (81) d'un angle correspondant à la vitesse sélectionnée.

FIG.1

**FIG.2**

FIG.3

FIG.4

FIG. 5

FIG. 6

EP 0 633 411 A1

FIG.7

EP 0 633 411 A1

# FIG. 8

80 · 93 · 115 · 112 · 111 · 113 · 91 · 116 · 117

**Office européen des brevets**

# RAPPORT DE RECHERCHE EUROPEENNE

Numero de la demande

EP 94 40 1560

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | GB-A-2 214 248 (AUTOMOTIVE PRODUCTS PLC) * le document en entier * | 1 | F16H61/28 |
| Y | | 2-4 | |
| A | | 5-14 | |
| | --- | | |
| Y | EP-A-0 403 787 (EATON CORPORATION) * abrégé; figures 1,2 * | 2-4 | |
| A | | 5-9 | |
| | --- | | |
| A | GB-A-2 119 460 (TOYOTA JIDOSHA K.K.) * le document en entier * ----- | 2,4 | |

**DOMAINES TECHNIQUES RECHERCHES (Int.Cl.6)**

F16H

Le présent rapport a été établi pour toutes les revendications

| Lieu de la recherche | Date d'achèvement de la recherche | Examinateur |
|---|---|---|
| LA HAYE | 14 Octobre 1994 | Van Prooijen, T |